# EUROPEAN PATENT SPECIFICATION

(11) **EP 3 740 798 B1**
(45) Date of publication and mention of the grant of the patent: **06.03.2024**
(21) Application number: 19741025.1
(22) Date of filing: 10.01.2019
(51) Int. Cl.: G02B 6/42

(54) **TELECOMMUNICATIONS CLOSURES WITH GRIPPING ELEMENTS**
TELEKOMMUNIKATIONSGEHÄUSE MIT GREIFELEMENTEN
FERMETURES DE TÉLÉCOMMUNICATIONS À ÉLÉMENTS DE PRÉHENSION

(30) Priority: 16.01.2018 US 201862617857 P
(43) Date of publication of application: 25.11.2020
(73) Proprietor: CommScope Technologies LLC, Hickory, NC 28602 (US)
(72) Inventor: GEENS, Johan, Hickory, North Carolina 28602 (US); VASTMANS, Kristof, Hickory, North Carolina 28602 (US)
(74) Representative: Murgitroyd & Company
(86) International application number: PCT/US2019/012978
(87) International publication number: WO 2019/143515

(56) References cited:
- WO-A1-2016/026002
- GB-A- 2 402 000
- GB-A- 2 546 750
- JP-A- 2017 106 484
- US-A- 6 051 007
- US-A1- 2005 267 475
- US-A1- 2006 167 458
- US-A1- 2006 195 101
- US-A1- 2006 235 398

## Description

### Cross-Reference to Related Application

This application is being filed on January 10, 2019 as a PCT International Patent Application and claims the benefit of U.S. Patent Application Serial No. 62/617,857, filed on January 16, 2018.

### Background

Telecommunications systems typically employ a network of telecommunications cables capable of transmitting large volumes of data over relatively long distances. Telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures or "closures" are adapted to house and protect telecommunications components and equipment such as wires, fibers, splices, termination panels, power splitters, and wave division multiplexers.

Telecommunications closures are often placed underground or partially underground, and include robust sealing and protection from intrusion by the elements. In addition, closures are designed to be "re-enterable," meaning they can be reopened to allow access to the telecommunications components housed therein and then closed up and re-sealed once the work is complete. Entering a closure can be necessary for any of a variety of reasons, such as to add or remove cables, re-route cables, perform splices, etc.

To this end, many telecommunications closures include separate access panels, dome-like covers, etc., that can be opened, removed, or detached to access the interiors of the closures, and then closed to reseal the enclosures. Other telecommunications enclosures take the form of elongated sleeves formed by wrap-around covers or half-shells having longitudinal edges that are joined by clamps or other retainers. Still other telecommunications enclosures include two half-pieces that are joined together through clamps, wedges or other structures.

Thus, regardless of the specific configuration of a given closure, generally telecommunications closures will include two housing pieces that together define an interior volume housing telecommunications equipment, the two housing pieces being sealingly mateable with each other to provide protection to the telecommunications equipment, and demateable from each other in order to access the interior volume and the telecommunications equipment. The closure can be provided with an actuator, such as a clamp, to squeeze one or more sealing elements (e.g., gel seal strips and/or gel seal blocks) between the housing pieces when it is desired to close and seal the closure, and to open the seal when it is desired to open the closure.

When access is needed to a closure already positioned in the field, a typical procedure involves lifting the closure out of the ground or manhole and then opening it up, e.g., by releasing the seal and removing a cover. To lift the closure out of the ground/manhole, a technician will typically grasp the cables that enter the closure by hand, essentially using the cables as handles for lifting the closure. However, lifting a telecommunications closure by the cables it supports can damage the cables and the delicate wires and/or optical fibers the cables hold, particularly when the cables lack robustness and are designed to withstand only relatively low lateral strain. These drawbacks are becoming more prevalent as telecommunications systems trend towards using thinner and less robust cables in an effort to reduce weight and cost.

GB2402000A and GB2546750 disclose relevant prior-art telecommunications closures.

### Summary

The present invention relates to a telecommunications closure according to claim 1. Further embodiments of the invention are described in the dependent claims.

In general terms, the present disclosure is directed to telecommunications closures and associated methods having improved and/or specialized gripping elements for lifting and moving the closures, e.g., for lifting the closure out of a manhole, pit or other operational position/location and/or lowering/replacing the closure back into the manhole, pit, or other operational position/location.

Thus, in at least some example of the closures and methods of this disclosure, each gripping element on a given closure is designed to be sufficiently strong and robust to maintain its structural integrity when used as the leverage point for lifting/lowering/moving the closure with which it is associated, including when the closure is fully loaded with telecommunications equipment and connected to one or more telecommunications cables.

In at least some examples, therefore, each gripping element can withstand a lifting force applied directly to the gripping element that exceeds the fully loaded weight of the closure. Preferably, each gripping element is designed to withstand substantially more lifting force than that, e.g., at least 1.5 times, at least 2.0 times, at least 2.5 times, at least 3.0 times, at least 3.5 times, at least 4.0 times, at least 4.5 times, at least 5.0 times the fully loaded weight of the closure, or more, without jeopardizing the gripping element's structural integrity. In addition, in at least some examples, each gripping element is designed to have sufficient durability to withstand repeated liftings at the closure's maximum weight without jeopardizing its structural integrity, e.g., at least 50 liftings, at least 100 liftings, at least 500 liftings, at least 1,000 liftings, or more.

In other examples, a given closure can be equipped with two or more of the gripping elements that are designed to be engaged and used together when lifting and/or lowering the closure, such that the foregoing strength and durability characteristics apply to the combination of two or more gripping elements rather than to each individual gripping element.

According to certain aspects of the present disclosure, a telecommunications closure has an open configuration and a closed configuration such that in the closed configuration the telecommunications closure has a greatest length that extends from a proximal end to a distal end and is defined by an axis that extends through the proximal and distal ends and bisects a greatest width and a greatest height of the closure that are orthogonal to the greatest length, the closure including a first housing piece and a second housing piece that are mateable and demateable to selectively provide access to an interior volume of the closure, the first housing piece including one or more ports adapted to receive one or more telecommunications cables entering the interior volume, wherein at least one of the first housing piece or the second housing piece includes a handling section that includes at least one protruding gripping element. In some examples, the at least one protruding gripping element can be integral with the first or the second housing piece. In alternative examples, the at least one protruding gripping element can be a separately manufactured component from the first and the second housing pieces, and permanently or removably affixed or otherwise mounted to the first and/or the second housing pieces.

According to certain aspects of the present disclosure, a telecommunications closure has an open configuration and a closed configuration such that in the closed configuration the telecommunications closure has a greatest length that extends from a proximal end to a distal end and is defined by an axis that extends through the proximal and distal ends and bisects a greatest width and a greatest height of the closure that are orthogonal to the length, the closure including a first housing piece and a second housing piece that are mateable and demateable to selectively provide access to an interior volume of the closure, the first housing piece including one or more ports adapted to receive one or more telecommunications cables entering the interior volume, the first housing piece including a mating section adapted to mate with the second housing piece, and a handling section integral or affixed to the mating section, the handling section further including at least one protruding gripping element. In some examples, the at least one protruding gripping element can be integral with the first or the second housing piece. In alternative examples, the at least one protruding gripping element can be a separately manufactured component from the first and the second housing pieces, and permanently or removably affixed or otherwise mounted to the first and/or the second housing pieces.

In some examples of the foregoing telecommunications closures, the at least one gripping element protrudes radially away from the axis.

In some examples of the foregoing telecommunications closures, at least a portion of the handling section is positioned radially farther from the axis than at least one of the one or more ports.

In some examples of the foregoing telecommunications closures, the handling section is positioned closer to the proximal end than the mating section.

In some examples of the foregoing telecommunications closures, the mating section and the handling section are together an integral, single piece, e.g., integrally molded or machined.

In some examples of the foregoing telecommunications closures, the at least one gripping element includes one or more flanges extending radially away from the axis.

In some examples of the foregoing telecommunications closures, the at least one gripping element includes one or more through holes. In some examples, the one or more or more through holes are disposed in the one or more radially extending flanges.

In some examples of the foregoing telecommunications closures, the at least one gripping element includes one or more flanges that include an elongate receptacle elongated in a dimension parallel to the axis and defined by an elongate wall, the elongate receptacle having an open end for receiving a gripping tool. In some examples, the open end is at a proximal end of the handling section. In some examples, the elongate wall includes an elongate slot or discontinuity that is in communication with the elongate receptacle, such that the elongate wall has a substantially C-shaped cross-section perpendicular to the axial direction. In some examples, the wall is cylindrical or partially cylindrical, and is adapted to receive a cylindrical, partially cylindrical, or other shaped gripping tool inserted therein. In some examples, the elongate wall protrudes radially away from the axis extending from a radially protruding leg of the flange.

In some examples of the foregoing telecommunications closures, the at least one gripping element includes one or more ergonomic features.

In some examples of the foregoing telecommunications closures, two or more of the gripping elements are positioned at different circumferential positions about the axis. In some examples, the two or more gripping elements are equally spaced circumferentially about the axis.

In some examples of the foregoing telecommunications closures, the handling section includes a cable shielding wall having an inner surface adapted to at least partially radially surround the at least one cable and disposed radially farther from the axis than the at least one port, the one or more flanges protruding radially from an outer surface of the cable shielding wall.

According to further aspects of the present disclosure, a method of moving a telecommunications closure is provided, the telecommunications closure having an open configuration and a closed configuration such that in the closed configuration the telecommunications closure has a greatest length that extends from a proximal end to a distal end and is defined by an axis that extends through the proximal and distal ends and bisects a greatest width and a greatest height of the closure that are orthogonal to the greatest length, the closure including a first housing piece and a second housing piece that are mateable and demateable to selectively provide access to an interior volume of the closure, the first housing piece including one or more ports adapted to receive one or more telecommunications cables entering the interior volume, the first housing piece including a mating section adapted to mate with the second housing piece, and a handling section integral with or affixed to the mating section, the handling section further including at least one protruding gripping element, the method including gripping one or more of the at least one gripping element; and, once gripped, applying a force to move the telecommunications closure.

In some examples of the foregoing methods, the gripping element protrudes radially away from the axis.

In some examples of the foregoing methods, the force applied is at least partially an upward force against the force of gravity, the force being of a magnitude such that the closure is lifted upwards by the force.

In some examples of the foregoing methods, the method also includes lowering or otherwise replacing the closure into the position from which it was lifted by gripping the one or more gripping elements.

In some examples of the foregoing methods, the gripping is performed by hand.

In some examples of the foregoing methods, the gripping is performed by a tool.

In some examples of the foregoing methods, the at least one gripping element includes one or more through holes disposed in one or more radially extending flanges, and the gripping includes inserting a tool, such as a hook, into at least one of the one or more through holes.

In some examples of the foregoing methods, the at least one gripping element includes one or more radially extending flanges, and the gripping includes grasping by hand one or more of the radially extending flanges.

In some examples of the foregoing methods, the at least one gripping element includes one or more flanges that include an elongate receptacle elongated in a dimension parallel to the axis and defined by an elongate wall, the elongate receptacle having an open end, wherein the gripping includes inserting a gripping tool into the elongate receptacle via the open end.

In some examples of the foregoing methods, the at least one gripping element includes one or more radially extending flanges that include an elongate receptacle elongated in a dimension parallel to the axis and defined by an axially elongate wall, and the gripping includes grasping by hand one or more of the flanges.

In some examples of the foregoing methods, prior to the gripping the closure is disposed in a manhole and the method includes removing a cover from the manhole to provide access to the closure. In some examples, a tool is used for removing the cover, and the same tool is used for gripping at least one of the one or more gripping elements of the closure.

In some examples of the foreign methods, at least a portion of the handling section is positioned radially farther from the axis than at least one of the one or more ports.

In some examples of the foregoing methods, the handling section is positioned closer to the proximal end than the mating section.

In some examples of the foregoing methods, the mating section and the handling section are together an integral, single piece, e.g., integrally molded or machined.

In accordance with further aspects of the present disclosure, a system includes a telecommunications closure in accordance with the present disclosure, and a stand for supporting the telecommunications closure in a stationary position that facilitates access to the closure's interior volume, wherein the stand is adapted to support the closure by being intermateable with at least one of the one or more gripping elements.

In some examples of the foregoing systems, the stand doubles as a tool for engaging the one or more gripping elements and lifting, lowering or otherwise moving the telecommunications closure.

In some examples of the foregoing systems, the stand includes one or more rods or spikes adapted to mate with the one or more gripping elements, such as by inserting the rods/spikes in the elongate receptacles defined by the elongate walls of certain examples of the closures described herein.

In some examples of the foregoing systems, the stand includes a first portion that includes one or more slots in communication with an open ended cavity, the cavity being adapted to receive at least a portion of the holding section of the closure, and the one or more slots being adapted to receive the one or more gripping elements, the stand also including a second portion that supports the first portion and includes a support platform for supporting at least a portion of the holding section and/or the one or more gripping elements.

In some examples of the foregoing systems, the stand includes one or more legs and a support platform coupled to the legs such that the telecommunications closure can be supported in an elevated position.

In some examples of the foregoing systems, the platform is ring-shaped or substantially ring shaped or otherwise includes a rim defining an opening to allow cables entering the closure to pass through the opening defined by the ring/rim. In some examples, the platform ring/rim includes one or more gaps in its circumference/perimeter through which one or more cables entering the closure can pass to allow the stand to engage the gripping elements for moving and/or supporting the closure.

In accordance with further aspects of the present disclosure, a stand for supporting a telecommunications closure includes features consistent with any of the stands of the systems described above.

In accordance with further aspects of the present disclosure, a method of using a telecommunications closure of the present disclosure includes lifting the closure by mating/engaging a tool or a stand in accordance with the present disclosure with the one or more gripping elements of the closure, supporting the closure in an elevated position on a stand of the present disclosure while the one or more gripping elements are intermated with the stand, and removing a housing piece, e.g., a cover, of the closure while the closure is supported on the stand in order to access the interior volume defined by the closure.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

The accompanying drawings, which are incorporated in and constitute a part of the description, illustrate several aspects of the present disclosure. A brief description of the drawings is as follows:
FIG. 1 is a side view of an example prior art telecommunications closure, the closure being in a closed configuration with schematically drawn cables entering the closure.
FIG. 2 is a perspective of a further example prior art telecommunications closure, the closure being in a closed configuration with a schematically drawing cable entering the closure.
FIG. 3 is a top view of a further example prior art telecommunications closure, the closure being in a closed configuration with a schematically drawn cable entering the closure.
FIG. 4 is a schematic perspective view of an example telecommunications closure not according to the claimed invention, with schematically drawn cables entering the closure, the closure also being shown with a schematically drawn example gripping tool.
FIG. 5 is a schematic perspective view of a further example telecommunications closure in accordance with the present disclosure, with a schematically drawn cable entering the closure, the closure also being shown with a schematically drawn further example gripping tool.
FIG. 6 is a schematic representation of an example stand that can be used to support at least one of the example closures of the present disclosure.
FIG. 7 is a schematic representation of a further example stand that can be used to support at least one of the example closures of the present disclosure.

### Detailed Description

Reference will now be made in detail to exemplary aspects of the present disclosure that are illustrated in the accompanying drawings. Wherever possible, the same reference numbers will be used throughout the drawings to refer to the same or like parts.

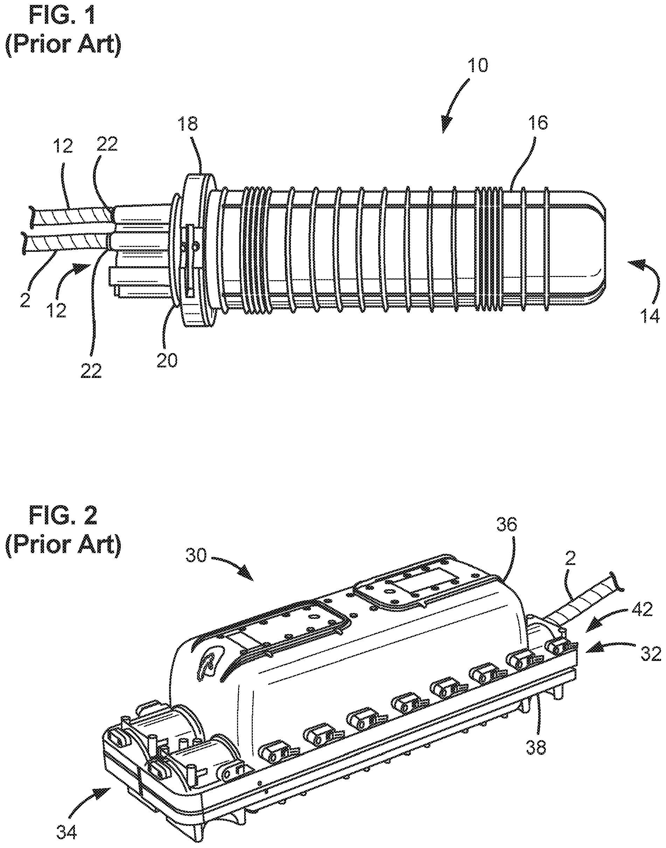

Referring to FIG. 1, a prior art telecommunications closure 10 is shown in a closed configuration and has a length that extends between a proximal end 12 and a distal end 14.

The closure 10 includes a first housing piece 18 that sealingly engages a second housing piece 16 via activation of a clamp 20 that compresses a sealing block between the first housing piece 18 and the second housing piece 16, and also latches the first and second housing pieces together. In this example the second housing piece 16 is a dome cover and the first housing piece 18 is a base.

The base 18 can support telecommunications equipment, such as splice trays, fiber organization structures, cable mounting structures, etc. In addition, the base 18 includes a plurality of cable ports 22 by which cables 2, e.g., drop cables or distribution cables, enter and leave the closure 10. At any given time a port that is not used by a cable can be sealed in order to maintain an interior volume of the closure that is sealed off from external contaminants.

Referring to FIG. 2, a further prior art telecommunications closure 30 is shown in a closed configuration and has a length that extends between a proximal end 32 and a distal end 34.

The closure 30 includes a first housing piece 38 that sealingly engages a second housing piece 36.

The first housing piece 38 can support telecommunications equipment, such as splice trays, fiber organization structures, cable mounting structures, etc. In addition, the first housing piece 38 includes a plurality of cable ports 42 by which one or more cables 2, e.g., drop cables or distribution cables, enter and leave the closure 30. At any given time a port that is not used by a cable can be sealed in order to maintain an interior volume of the closure that is sealed off from external contaminants.

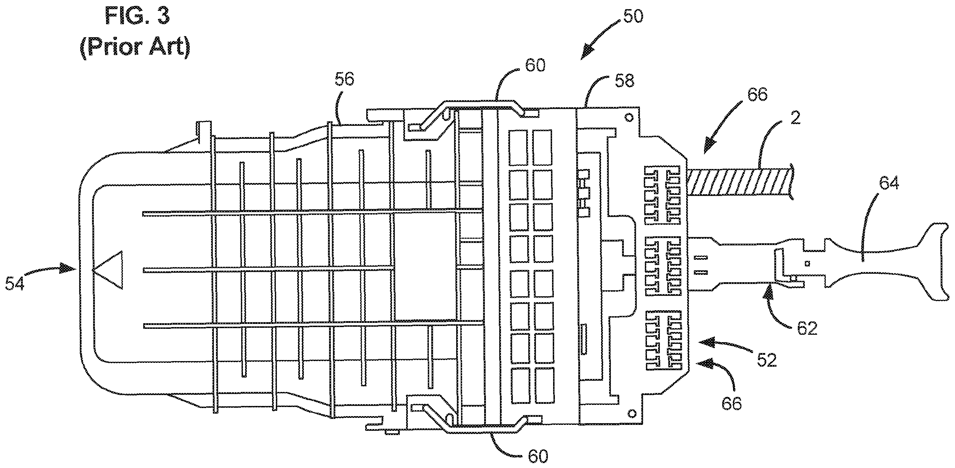

Referring to FIG. 3 a further prior art telecommunications closure 50 is shown in a closed configuration and has a length that extends between a proximal end 52 and a distal end 54.

The closure 50 includes a first housing piece 58 that sealingly engages a second housing piece 56 via activation of latch clamps 60 that latch the first and second housing pieces together, and a gel seal actuator 62 having a rotatable actuation handle 64 that compresses one or more sealing blocks between the first housing piece 58 and the second housing piece 56. In this example the second housing piece 56 is a dome cover and the first housing piece 58 is a base.

The base 58 can support telecommunications equipment, such as splice trays, fiber organization structures, cable mounting structures, etc. In addition, the base 58 includes a plurality of cable ports 66 by which cables 2, e.g., drop cables and/or feeder cables, enter and leave the closure 50. At any given time a port that is not used by a cable can be sealed in order to maintain an interior volume of the closure that is sealed off from external contaminants.

The example closures 10, 30 and 50 all suffer from a lack of a handling/gripping feature by which the closure can be lifted without relying on the cables 2 for grip/leverage, which can cause the cables to unduly bend and/or become damaged.

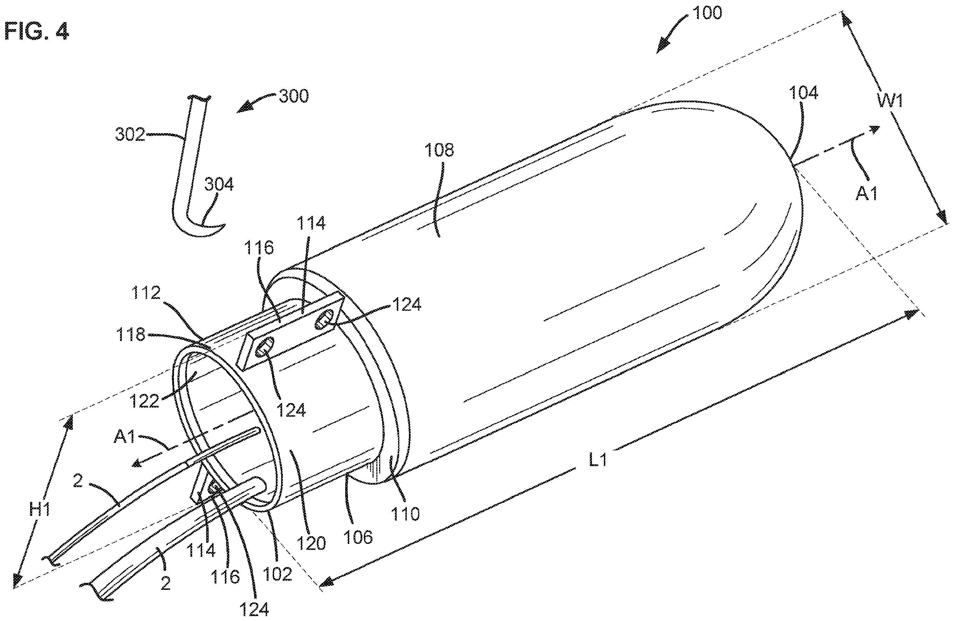

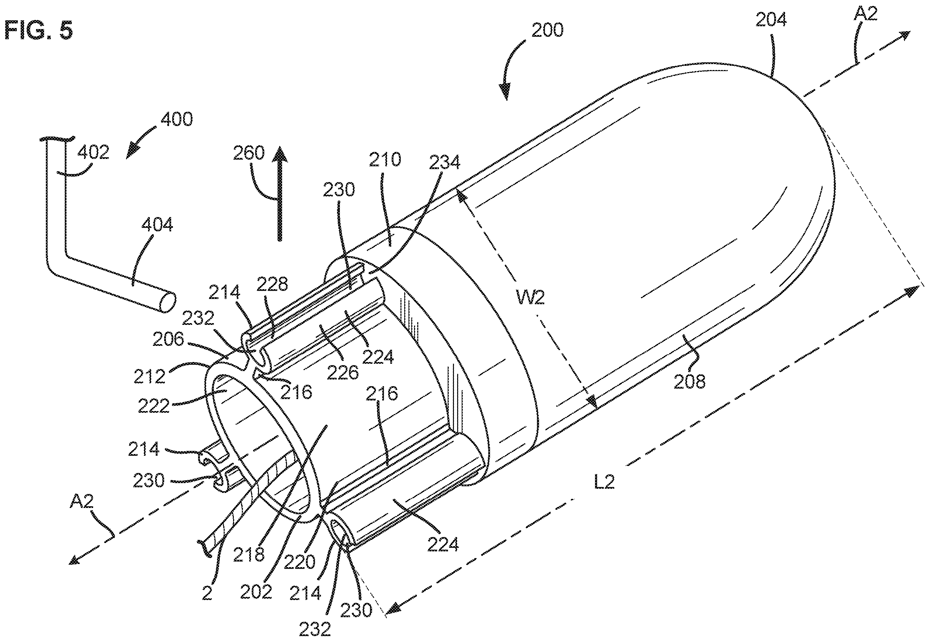

Referring now to FIG. 4, an example closure 100 not according to the claimed invention is depicted, which provides at least one solution to at least one of the problems noted above with respect to the closures 10, 30 and 50. It should be appreciated that principles and features described below with respect to the closures 100 and 200 (FIG. 5) can be applied to any of the closures 10, 30 or 50 described above, and the particular embodiments of closures 100 and 200 described below merely illustrate two of many examples of how these principles and features may be applied to telecommunications closures.

Turning again to FIG. 4, the telecommunications closure 100 has an open configuration and a closed configuration, and is shown in the closed configuration in which it has a greatest length L1 that extends axially from a proximal end 102 to a distal end 104. The closure 100 is defined by an axis A1 that defines an axial dimension and extends through the proximal and distal ends 102 and 104 and bisects a greatest width W1 and a greatest height H1 of the closure 100, the height and width both being orthogonal to each other and to the length L1.

The closure 100 includes a first housing piece 106 and a second housing piece 108 that are mateable and demateable to selectively provide access to an interior volume of the closure 100. A clamp or other mechanism can be provided on the mating section 110 to snugly mate the housing pieces together, and the closure 200 can be provided with one or more sealing elements to prevent ingress of contaminants into the interior volume when the closure is in the closed configuration.

In this example, the first housing piece 106 is a base and the second housing piece 108 is a dome cover, but these are just example configurations for the first and second housing pieces.

Optionally, the first housing piece 106 can support telecommunications equipment, such as splice trays, cable fixation units, fiber organizing structures, etc., which, when the closure 100 is closed, are protected within the cover 108.

The first housing piece 106 includes one or more ports (not shown) adapted to receive one or more telecommunications cables 2 entering the interior volume defined by the first and second housing pieces.

The first housing piece 106 includes a mating section 110 adapted to sealingly mate with the second housing piece 108, and a protruding handling section 112 integral with the mating section 110, the handling section 112 further including at least one gripping element 114 and in this example, two gripping elements 114. In other examples, the handling section and/or the gripping elements are manufactured separately from the housing pieces and mounted to or affixed to one of the housing pieces. In other examples, one, three, four, five, six, seven, eight, or more gripping elements can be provided. The gripping elements 114 can be, but need not be, equally spaced circumferentially about the axis A1. In the example shown, the two gripping elements 114 are equally spaced circumferentially about the axis A1.

In this example, each of the gripping elements 114 comprises a flange 116 extending/protruding radially away from the axis A1. Each flange 116 extends radially from an outer surface 120 of a generally cylindrical cable shielding wall 118 of the handling section 112. The inner surface 122 of the cable shielding wall 118 radially surrounds and encloses the cables 2, the cable shielding wall 218 being radially farther from the axis A1 than the one or more cables 2.

It should be appreciated that the gripping elements of the present disclosure need to extend/protrude in a radial direction. In alternative examples, the gripping elements can extend/protrude from either or both of the housing pieces and in any direction, e.g., axially.

It should also be appreciated that the handling section 112 need not include a cable shielding wall 118 and, as noted, the gripping elements may protrude from any portion of the first housing piece 106, or even from the second housing piece 108.

Each flange 116 includes one or more through holes 124, each of the through holes 124 extending through the respective flange 116 in a direction perpendicular to the direction by which the flange radially extends/protrudes from the cable shielding wall 118. In the example shown, each flange 116 includes two through holes 124. In other examples, one, three, four, five, six, seven, eight or more through holes can be provided in one or more of the flanges. In further examples, no through holes can be provided in one or more of the flanges, the flange being adapted to be grasped directly without inserting a tool into a through hole.

In the example closure 100, the flanges 116 are positioned radially farther from the axis A1 than at least one of the one or more cable ports, which are radially closer to the axis A1 than the cable shielding wall 118. This can allow for accessing the flanges 116 without touching or significantly disturbing (and potentially damaging) the cables 2.

In the example closure 100 the handling section 112 is positioned closer to the proximal end 102 than the mating section 110.

In some examples of the closure 100, the mating section 110 and the handling section 112 (including the gripping elements 114) are together an integral, single piece, e.g., integrally molded or machined together.

It should be appreciated that one or more of the gripping elements 114 can be provided with one or more ergonomic features, such as specially configured grasping surfaces to facilitate gripping the gripping elements 114 by hand.

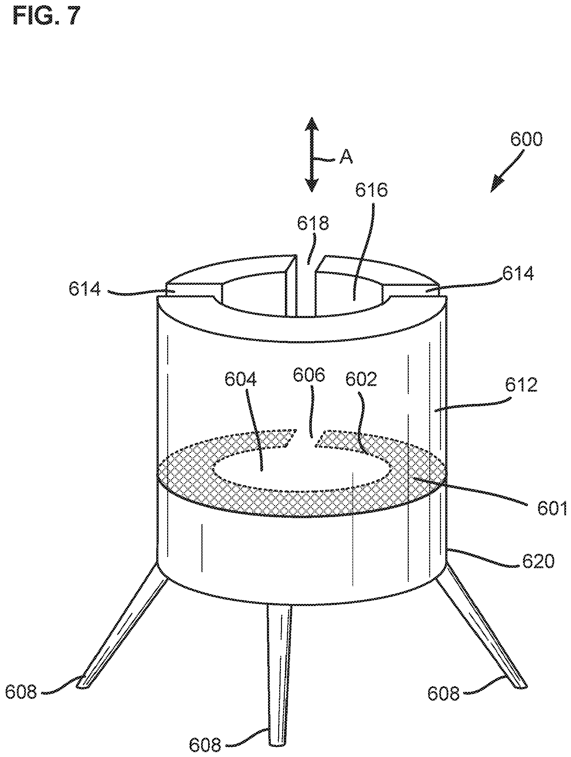

In addition, FIG. 4 illustrates an example gripping tool 300 having a shaft 302 connected to a J-hook 304. The tool 300 can be made of a strong rigid material such as iron or steel. The through holes 124 of the closure 100 can be adapted to receive the J-hook 304. Thus, in one example method of lifting or otherwise moving the closure 100, a technician holds the shaft 302 of the tool 300, inserts the J-hook 304 into one of the through holes 124, and applies a pulling first on the shaft 302 to lift or otherwise move the closure 100. A further example gripping tool 600 that can be used to engage the gripping elements 114 and which can double as a support stand, is described below in connection with FIG. 7.

In at least some examples, each gripping element 114 can withstand a lifting force applied directly to the gripping element (e.g., via the tool 300 inserted in one or both through holes 124) that exceeds the fully loaded weight of the closure 100. Preferably, each gripping element 114 is designed to withstand substantially more lifting force than that, e.g., at least 1.5 times, at least 2.0 times, at least 2.5 times, at least 3.0 times, at least 3.5 times, at least 4.0 times, at least 4.5 times, at least 5.0 times the fully loaded weight of the closure 100, or more, without jeopardizing the gripping element's structural integrity. In addition, in at least some examples, each gripping element 114 is designed to have sufficient durability to withstand repeated liftings of this nature at the closure's maximum weight without jeopardizing its structural integrity, e.g., at least 50 liftings, at least 100 liftings, at least 500 liftings, at least 1,000 liftings, or more.

Referring now to FIG. 5, a further example telecommunications closure 200 is illustrated. The closure 200 has an open configuration and a closed configuration, and is shown in the closed configuration in which it has a greatest length L2 that extends axially from a proximal end 202 to a distal end 204. The closure 200 is defined by an axis A2 that defines an axial dimension and extends through the proximal and distal ends 202 and 204 and bisects a greatest width W2 and a greatest height of the closure 200, the height and width both being orthogonal to each other and to the length L2.

The closure 200 includes a first housing piece 206 and a second housing piece 208 that are mateable and demateable to selectively provide access to an interior volume of the closure 200. A clamp or other mechanism can be provided on the mating section 210 to snugly mate the housing pieces together, and the closure 200 can be provided with one or more sealing elements to prevent or minimize ingress of contaminants into the interior volume when the closure is in the closed configuration.

In this example, the first housing piece 206 is a base and the second housing piece 208 is a dome cover, but these are just example configurations for the first and second housing pieces.

Optionally, the first housing piece 206 can support telecommunications equipment, such as splice trays, cable fixation units, fiber organizing structures, etc.

The first housing piece 206 includes one or more ports (not shown) adapted to receive one or more telecommunications cables 2 entering the interior volume defined by the first and second housing pieces 206 and 208.

The first housing piece 206 includes a mating section 210 adapted to sealingly mate with the second housing piece 208, and a protruding handling section 212 integral with the mating section 210, the handling section 212 further including at least one gripping element 214 and in this example, three gripping elements 214. In other examples, the handling section and/or the gripping elements are manufactured separately from the housing pieces and mounted to or affixed to one of the housing pieces. In other examples, one, two, four, five, six, seven, eight, or more gripping elements can be provided. The gripping elements 214 can be, but need not be, equally spaced circumferentially about the axis A2. In the example shown, the three gripping elements 214 are equally spaced circumferentially about the axis A2.

In this example, each of the gripping elements 214 is a flange that includes a radially extending foot 216. Each foot 216 extends radially from an outer surface 220 of a generally cylindrical cable shielding wall 218 of the handling section 212. The inner surface 222 of the cable shielding wall 218 radially surrounds and encloses the one or more cables 2, the cable shielding wall 218 being radially farther from the axis A2 than the one or more cables 2. This can allow for accessing the gripping elements 214 without touching or significantly disturbing (and potentially damaging) the cables 2.

Radially extending from each foot 216 is an elongate, generally cylindrical wall 224 having an outer surface 226 and an inner surface 228 that defines an elongate receptacle 230 elongated in a dimension parallel to the axis A1. The receptacle 230 has an open end 232 for slidingly receiving a gripping tool into the receptacle 230. In this example, the open end 232 of each receptacle 230 coincides with the proximal end 202 of the handling section and the closure 200.

In addition, in this example the elongate wall 224 includes an elongate slot 234 (or discontinuity) elongated in a dimension parallel to the axis that is in communication with the elongate receptacle 230, such that the elongate wall 224 has a substantially C-shaped cross-section perpendicular to the axial direction.

In some examples, the elongate wall 224 is adapted to be resiliently flexed to resiliently widen the slot 234 in order to receive a lifting/lowering/moving tool such that once the tool is received in the receptacle 230, the wall 224 resiliently returns to its relaxed position and the tool can apply force via the wall 224 to move/lift/lower the closure 200.

In some examples, the slot 234 is wide enough when the wall 224 is in the relaxed state to receive a lifting tool in the receptacle 230 via the slot 234.

It should be appreciated that the handling section 212 need not include a cable shielding wall 218, and the gripping elements may protrude from any portion of the first housing piece 206, or even from the second housing piece 208.

In the example closure 200, the flanges 214 are positioned radially farther from the axis A2 than at least one of the one or more cable ports, which are radially closer to the axis A2 than the cable shielding wall 218.

In the example closure 200 the handling section 212 is positioned closer to the proximal end 202 than the mating section 210.

In some examples of the closure 200, the mating section 210 and the handling section 212 (including the gripping elements 214) are together an integral, single piece, e.g., integrally molded or machined together.

It should be appreciated that one or more of the gripping elements 214 can be provided with one or more ergonomic features, such as specially configured grasping surfaces to facilitate gripping the gripping elements 214 by hand.

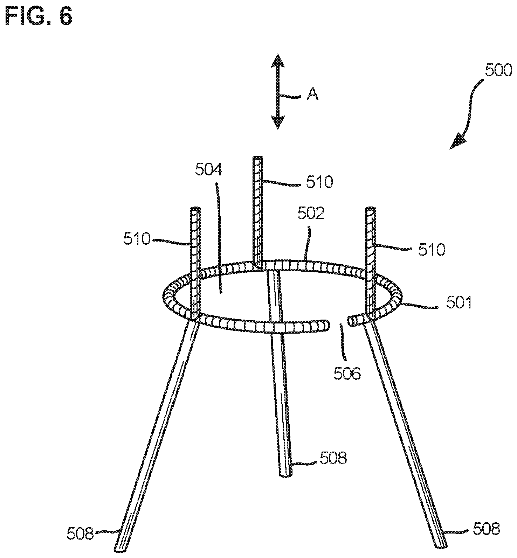

In addition, FIG. 5 illustrates an example L-shaped gripping tool 400 having a shaft 402 and adjoining closure engaging component 404. The tool 400 can be made of a strong rigid material such as iron or steel. The receptacles 230 of the closure 200 can be adapted to receive the closure engaging component 404. Thus, in one example method of lifting or otherwise moving the closure 200, a technician holds the shaft 402 of the tool 400, inserts the closure engaging component 404 into one of the receptacles 230 via the open end 232 or the slot 234, and applies a pulling first on the shaft 402 (e.g., in the direction of the arrow 260) to lift or otherwise move the closure 200. A further example gripping tool 500 that can be used to engage the gripping elements 114 and which can double as a support stand, is described below in connection with FIG. 6.

In at least some examples, each gripping element 214 can withstand a lifting force applied directly to the gripping element (e.g., via the tool 400 inserted in the gripping element's receptacle 230) that exceeds the fully loaded weight of the closure 200. Preferably, each gripping element 214 is designed to withstand substantially more lifting force than that, e.g., at least 1.5 times, at least 2.0 times, at least 2.5 times, at least 3.0 times, at least 3.5 times, at least 4.0 times, at least 4.5 times, at least 5.0 times the fully loaded weight of the closure 200, or more, without jeopardizing the gripping element's structural integrity. In addition, in at least some examples, each gripping element 214 is designed to have sufficient durability to withstand repeated liftings of this nature at the closure's maximum weight without jeopardizing its structural integrity, e.g., at least 50 liftings, at least 100 liftings, at least 500 liftings, at least 1,000 liftings, or more.

Referring to FIG. 6, an example stand 500 is depicted. The stand 500 can double as a moving tool and can be used to lift, move, and/or support in a stationary position one of the closures described herein, such as the closure 200, thereby facilitating access to the closure's interior volume. The stand 500 is intermateable with the gripping elements 214 of the closure 200. The axial direction is indicated by the arrows A.

The stand 500 includes a support platform 501 that includes a rim 502 defining an opening 504. The rim 502 can include at least one gap 506 through which the one or more cables 2 can radially pass such that the cables 2 extend through the opening 504 when the stand 500 is properly engaged with the closure 200. A plurality of legs 508 are coupled to and support the rim 502 and allow the closure 200 to be to supported by the rim 502 in an elevated position, e.g., with the free ends of the legs 508 resting on the ground or a substantially horizontal surface.

A plurality of rods 510 extend from the rim 502 in a direction that is generally perpendicular to the plane defined by the opening 504. Each of the rods 510 is adapted to be slidingly inserted into one of the axially elongate receptacles 230 of the closure 200. In this example, there are three rods 510 corresponding to the three receptacles 200. More or fewer rods can be provided. The rim 502 is adapted to engage and support the first housing piece 206.

Referring to FIG. 7, a further example stand 600 is depicted. The stand 600 can double as a moving tool and can be used to lift, move, and/or support in a stationary position one or more of the closures described herein, such as the closure 100, thereby facilitating access to the closure's interior volume. The stand 100 is intermateable with the gripping elements 114 of the closure 100.

The stand 600 includes a support platform 601 that includes a rim 602 defining an opening 604. The platform 601 and rim 602 can include at least one gap 606 through which the one or more cables 2 can radially pass such that the cables 2 extend through the opening 604 when the stand 600 is properly engaged with the closure 100.

The stand 600 includes a first portion 612 that includes one or more slots 614 in radial communication with a cavity 616 that is open at both axial ends, the cavity 616 being adapted to receive the cable shielding wall 118 of the closure 100, and each of the slots 614 being adapted to receive one of the flanges 116 of the gripping elements 114 of the closure 100. The cavity 616 is axially aligned (the axial dimension is indicated by the arrows A) with and in communication with the opening 604. In some examples, the maximum width of the opening 604 perpendicular to the axial direction is smaller than the corresponding maximum width of the cavity 616. The first portion 612 also includes a gap 618 that is offset from the slots 614 and axially aligned with the gap 606. More or fewer slots can be provided to correspond to the number of gripping elements, and more gaps 618 can be provided than shown.

The stand 600 also includes a second portion 620 that supports the first portion 612 and includes the support platform 601 and the gap 606. The platform 601 is adapted to support the flanges 116 and or another portion of the gripping section of the closure 100.

A plurality of legs 608 are coupled to the second portion 620 and allow the closure 100 to be to supported by the platform 601 in an elevated position, e.g., with the free ends of the legs 608 resting on the ground or a substantially horizontal surface.

## Claims

1. A telecommunications closure (200), the closure having an open configuration and a closed configuration, the closure comprising:
a first housing piece (206) and a second housing piece (208) that are mateable and demateable to selectively provide access to an interior volume of the closure, the first housing piece including one or more ports adapted to receive one or more telecommunications cables (2) entering the interior volume, the first housing piece including a mating section (210) adapted to mate with the second housing piece, and a handling section (212) integral with the mating section, the handling section further including at least one protruding gripping element (214),
wherein in the closed configuration:
the closure has a greatest length (L2) that extends from a proximal end (202) to a distal end (204) and is defined by an axis (A2) that extends through the proximal end and the distal end;
the at least one protruding gripping element protrudes radially away from the axis;
**characterized in that**
a greatest dimension (W2) of the closure perpendicular to the axis (A2) is defined by the second housing piece (208).

2. The telecommunications closure of claim 1, wherein the greatest length bisects the greatest dimension.

3. The telecommunications closure of claim 1, wherein at least a portion of the handling section is positioned radially farther from the axis than at least one of the one or more ports.

4. The telecommunications closure as in any of claims 2-3, wherein the handling section is positioned closer to the proximal end than the mating section.

5. The telecommunications closure as in any of claims 2-4, wherein the at least one gripping element includes one or more flanges (214) extending radially away from the axis.

6. The telecommunications closure as in claim 5, wherein the one or more flanges include an elongate receptacle (230) elongated in a dimension parallel to the axis and defined by an elongate wall (224) elongated in a dimension parallel to the axis, the elongate receptacle having an open end (232) for receiving a gripping tool (400).

7. The telecommunications closure as in claim 6, wherein the open end is at a proximal end of the handling section.

8. The telecommunications closure as in any of claims 6-7, wherein the elongate wall includes an elongate slot (234) elongated in a dimension parallel to the axis that is in communication with the elongate receptacle.

9. The telecommunications closure as in any of claims 6-8, wherein the wall is generally cylindrical.

10. The telecommunications closure as in any of claims 6-9, wherein the elongate wall protrudes radially away from the axis and extends from a radially protruding foot (216) of one of the one or more flanges.

11. The telecommunications closure as in any of claims 1-10, wherein the handling section includes a cable shielding wall (218) having an inner surface (222) adapted to at least partially radially enclose the one or more telecommunications cables and disposed radially farther from the axis than the at least one port, and wherein the at least one gripping element protrudes radially from an outer surface of the cable shielding wall.

## Patentansprüche

1. Telekommunikationsverschlussvorrichtung (200), wobei die Verschlussvorrichtung eine offene Konfiguration und eine geschlossene Konfiguration aufweist und umfasst:
ein erstes Gehäuseteil (206) und ein zweites Gehäuseteil (208), die zusammenfügbar und trennbar sind, um selektiv Zugang zu einem Innenraum der Verschlussvorrichtung bereitzustellen, wobei das erste Gehäuseteil eine oder mehrere Öffnungen umfasst, die angepasst sind, ein oder mehrere Telekommunikationskabel (2) aufzunehmen, die in den Innenraum eintreten, und das erste Gehäuseteil einen Zusammenfügungsabschnitt (210) umfasst, der angepasst ist, mit dem zweiten Gehäuseteil zusammengefügt zu werden, und einen Handhabungsabschnitt (212), der in den Zusammenfügungsabschnitt integriert ist, wobei der Handhabungsabschnitt ferner mindestens ein vorstehendes Greifelement (214) umfasst,
wobei in der geschlossenen Konfiguration:
die Verschlussvorrichtung eine größte Länge (L2) aufweist, die sich von einem proximalen Ende (202) zu einem distalen Ende (204) erstreckt und durch eine Achse (A2) definiert ist, die sich durch das proximale Ende und das distale Ende erstreckt;
das mindestens eine vorstehende Greifelement von der Achse weg radial vorsteht; **dadurch gekennzeichnet, dass**
eine größte Abmessung (W2) der Verschlussvorrichtung senkrecht zu der Achse (A2) durch das zweite Gehäuseteil (208) definiert ist.

2. Telekommunikationsverschlussvorrichtung nach Anspruch 1, wobei die größte Länge die größte Abmessung halbiert.

3. Telekommunikationsverschlussvorrichtung nach Anspruch 1, wobei mindestens ein Abschnitt des Handhabungsabschnitts radial weiter von der Achse entfernt positioniert ist als mindestens einer von dem einen oder den mehreren Anschlüssen.

4. Telekommunikationsverschlussvorrichtung nach einem der Ansprüche 2 bis 3, wobei der Handhabungsabschnitt näher als der Zusammenfügungsabschnitt an dem proximalen Ende positioniert ist.

5. Telekommunikationsverschlussvorrichtung nach einem der Ansprüche 2 bis 4, wobei das mindestens eine Greifelement einen oder mehrere Flansche (214) umfasst, die sich radial von der Achse weg erstrecken.

6. Telekommunikationsverschlussvorrichtung nach Anspruch 5, wobei der eine oder die mehreren Flansche eine längliche Aufnahme (230) umfassen, die in einer Abmessung parallel zur Achse länglich ist und durch eine längliche Wand (224) definiert ist, die in einer Abmessung parallel zur Achse länglich ist, und die längliche Aufnahme ein offenes Ende (232) zum Aufnehmen eines Greifwerkzeugs (400) aufweist.

7. Telekommunikationsverschlussvorrichtung nach Anspruch 6, wobei sich das offene Ende an einem proximalen Ende des Handhabungsabschnitts befindet.

8. Telekommunikationsverschlussvorrichtung nach einem der Ansprüche 6 bis 7, wobei die längliche Wand einen länglichen Schlitz (234) aufweist, der in einer Abmessung parallel zu der Achse, die mit der länglichen Aufnahme in Verbindung steht, länglich ist.

9. Telekommunikationsverschlussvorrichtung nach einem der Ansprüche 6 bis 8, wobei die Wand im Allgemeinen zylindrisch ist.

10. Telekommunikationsverschlussvorrichtung nach einem der Ansprüche 6 bis 9, wobei die längliche Wand radial von der Achse weg vorsteht und sich von einem radial vorstehenden Fuß (216) von einem der einen oder der mehreren Flansche erstreckt.

11. Telekommunikationsverschlussvorrichtung nach einem der Ansprüche 1 bis 10, wobei der Handhabungsabschnitt eine Kabelabschirmwand (218) mit einer Innenfläche (222) umfasst, die angepasst ist, das eine oder die mehreren Telekommunikationskabel mindestens teilweise radial zu umschließen, und radial weiter weg von der Achse als die mindestens eine Öffnung angeordnet ist, und wobei das mindestens eine Greifelement von einer Außenfläche der Kabelabschirmwand radial vorsteht.

## Revendications

1. Fermeture de télécommunications (200), la fermeture ayant une configuration ouverte et une configuration fermée, la fermeture comprenant :
une première pièce de boîtier (206) et une deuxième pièce de boîtier (208) qui peuvent être accouplées et désaccouplées pour fournir sélectivement un accès à un volume intérieur de la fermeture, la première pièce de boîtier comprenant un ou plusieurs orifices adaptés pour recevoir un ou plusieurs câbles de télécommunications (2) pénétrant dans le volume intérieur, la première pièce de boîtier comprenant une section d'accouplement (210) adaptée pour s'accoupler avec la deuxième pièce de boîtier, et une section de manipulation (212) d'un seul tenant avec la section d'accouplement, la section de manipulation comprenant en outre au moins un élément de préhension saillant (214),
dans lequel dans la configuration fermée :
la fermeture a une longueur la plus grande (L2) qui s'étend à partir d'une extrémité proximale (202) jusqu'à une extrémité distale (204) et est définie par un axe (A2) qui s'étend à travers l'extrémité proximale et l'extrémité distale ;
l'au moins un élément de préhension saillant fait saillie radialement à l'écart de l'axe ; **caractérisé en ce qu'**une
plus grande dimension (W2) de la fermeture perpendiculaire à l'axe (A2) est définie par la deuxième pièce de boîtier (208).

2. Fermeture de télécommunications selon la revendication 1, dans laquelle la plus grande longueur coupe la plus grande dimension.

3. Fermeture de télécommunications selon la revendication 1, dans laquelle au moins une partie de la section de manipulation est positionnée radialement plus loin de l'axe qu'au moins un parmi le ou les orifices.

4. Fermeture de télécommunications selon l'une quelconque des revendications 2-3, dans laquelle la section de manipulation est positionnée plus près de l'extrémité proximale que la section d'accouplement.

5. Fermeture de télécommunications selon l'une quelconque des revendications 2-4, dans laquelle l'au moins un élément de préhension comprend une ou plusieurs brides (214) s'étendant radialement à l'écart de l'axe.

6. Fermeture de télécommunications selon la revendication 5, dans laquelle la ou les brides comprennent un réceptacle allongé (230) allongé dans une dimension parallèle à l'axe et défini par une paroi allongée (224) allongée dans une dimension parallèle à l'axe, le réceptacle allongé ayant une extrémité ouverte (232) pour la réception d'un outil de préhension (400).

7. Fermeture de télécommunication selon la revendication 6, dans laquelle l'extrémité ouverte est à une extrémité proximale de la section de manipulation.

8. Fermeture de télécommunications selon l'une quelconque des revendications 6-7, dans laquelle la paroi allongée comprend une fente allongée (234) allongée dans une dimension parallèle à l'axe qui est en communication avec le réceptacle allongé.

9. Fermeture de télécommunications selon l'une quelconque des revendications 6-8, dans laquelle la paroi est généralement cylindrique.

10. Fermeture de télécommunications selon l'une quelconque des revendications 6-9, dans laquelle la paroi allongée fait saillie radialement à l'écart de l'axe et s'étend à partir d'un pied faisant saillie radialement (216) d'une parmi la ou les brides.

11. Fermeture de télécommunication selon l'une quelconque des revendications 1-10, dans laquelle la section de manipulation comprend une paroi de blindage de câble (218) ayant une surface interne (222) adaptée pour enfermer au moins partiellement radialement le ou les câbles de télécommunications et disposée radialement plus loin de l'axe que l'au moins un orifice, et dans laquelle l'au moins un élément de préhension fait saillie radialement à partir d'une surface externe de la paroi de blindage de câble.
